# EUROPEAN PATENT SPECIFICATION

(11) **EP 4 089 147 B1**
(45) Date of publication and mention of the grant of the patent: **04.02.2026**
(21) Application number: 20912936.0
(22) Date of filing: 17.12.2020
(51) Int. Cl.: C08L 83/07, B41M 5/00, C08F 290/06, C08F 299/08, C08L 83/05, C08G 77/12, C08G 77/20, C09D 11/30, C09D 183/04, C09D 11/101

(54) **CURABLE COMPOSITION AND INK FOR INK-JET PRINTING**
HÄRTBARE ZUSAMMENSETZUNG UND TINTE FÜR TINTENSTRAHLDRUCK
COMPOSITION DURCISSABLE ET ENCRE POUR IMPRESSION À JET D'ENCRE

(30) Priority: 10.01.2020 JP 2020002910
(43) Date of publication of application: 16.11.2022
(73) Proprietor: Shin-Etsu Chemical Co., Ltd., Tokyo 100-0005 (JP)
(72) Inventor: TOYOSHIMA, Takeharu, Annaka-shi, Gunma 379-0224 (JP); OZAI, Toshiyuki, Annaka-shi, Gunma 379-0224 (JP)
(74) Representative: Ter Meer Steinmeister & Partner
(86) International application number: PCT/JP2020/047127
(87) International publication number: WO 2021/140862

(56) References cited:
- JP-A- 2003 238 808
- JP-A- 2005 023 291
- JP-A- H09 286 971
- JP-A- H09 296 113
- JP-A- S6 189 256
- US-A1- 2004 127 613

## Description

### TECHNICAL FIELD

This invention relates to an ink for inkjet ink printing. The invention relates more particularly to a curable composition comprised by the ink which have a good inkjet jettability and which can be both radical-cured by ultraviolet light irradiation and additioncured by heating.

### BACKGROUND ART

Inkjet jetting is an effective coating method for forming a thin film on a substrate. Polydimethylsiloxanes are generally unsuitable for inkjet jetting because of their low surface tension. However, acrylic-modified polysiloxanes in which the surface tension has been increased by the substitution of long-chain alkyl groups on the silicon atoms are known to have a good inkjet jettability (WO 2018/003381).

When an acrylic-modified polysiloxane is mixed with a photoinitiator and irradiated with ultraviolet light, the photoinitiator cleaves, forming active radicals, and curing proceeds by radical polymerization of the acryloyl groups. Curing proceeds instantaneously with ultraviolet-light (UV) irradiation, but the radicals are short-lived and having the cure proceed further by carrying out a postcure via heating or the like following UV irradiation is theoretically impossible. An additional problem is that when oxygen is present during curing, this hinders the cure.

JP 2005 023291 A relates to a rubber composition comprising (a) an organohydrogen polysiloxane having a (meth)acryloyl group and a hydrosilyl group, (b) an oily organopolysiloxane having a (meth)acryloyl group and not having any hydrosilyl group, (c) a compound (as an optional component) selected from the group consisting of an alkoxy silane, a partial hydrolysis condensate thereof, an organosilane-modified isocyanurate and an organosiloxane-modified isocyanurate, (d) a radiation sensitizer, and (e) a platinum family metallic catalyst
JP H09 2866971 A4 relates to his bonding agent comprising a silicone composition curable by a free radical reaction due to irradiation of high energy beam of an organopolysiloxane containing an acrylic functional group and a hydroxylation reaction of an alkenylcontaining organopolysiloxane with an Si-bound H- containing organopolysiloxane.

### SUMMARY OF INVENTION

### TECHNICAL PROBLEM

The present invention was arrived at in light of the above circumstances. The objects of the invention are to provide a curable composition and an inkjet ink which have a good inkjet jettability and for which radical curing and addition curing are both possible.

### SOLUTION TO PROBLEM

As a result of intensive investigations aimed at achieving these objects, the inventors have discovered that a curable composition which contains a (meth)acryl-functional organohydrogenpolysiloxane having hydrosilyl groups and alkyl groups on the molecule, a photopolymerization initiator and a hydrosilylation catalyst and which possesses a given surface tension and a given viscosity has a good inkjet jettability and also is both radical-curable via the (meth)acryloyl groups and addition-curable via hydrosilylation. This discovery ultimately led to the present invention. As used herein, "(meth)acryl-functional" refers to the inclusion of acryloyloxyalkyl groups or methacryloyloxyalkyl groups.

Accordingly, the invention provides the following:
An ink for inkjet printing comprising a curable composition which includes:
(A) an organopolysiloxane of formula (1) below 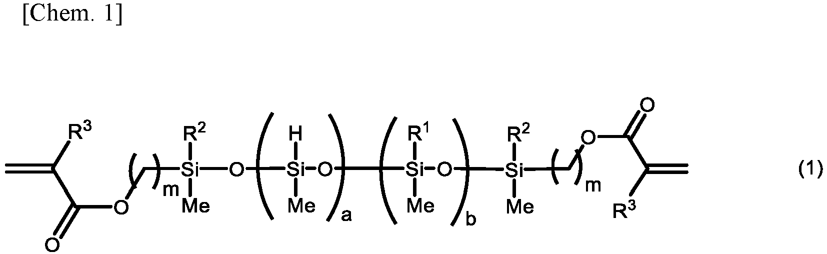 wherein each R¹ is independently a substituted or unsubstituted alkyl group of 1 to 8 carbon atoms, each R² is independently a substituted or unsubstituted alkyl group or aryl group, each R³ is independently a hydrogen atom or a methyl group, Me represents a methyl group, the subscript 'm' is independently at each occurrence an integer from 1 to 10, the subscripts 'a' and 'b' are each independently an integer of 1 or more, and the sum a+b is an integer from 3 to 120, and the siloxane units in parentheses to which a and b are attached may be arranged in any order,
(B) a photopolymerization initiator, and
(C) a hydrosilylation catalyst,
wherein the composition has a surface tension at 23°C that is from 23 to 30 mN/m and a viscosity at 23°C that is from 5 to 80 mPa·s;

In a preferred embodiment of the invention, the curable composition further includes (D) from 5 to 100 parts by weight of a (meth)acrylate compound lacking a siloxane structure per 100 parts by weight of component (A).

Another aspect is the use of the present ink in application as coatings, sealants, adhesives, and stereolithography material.

### ADVANTAGEOUS EFFECTS OF INVENTION

Because the curable composition of the invention has a good inkjet jettability and moreover has addition curability using SiH groups as the hydrosilylation reaction sites and radical curability using (meth)acryloyl groups as the reaction sites, it can be used in such applications as coatings, sealants, adhesives, and stereolithography materials for 3D printers.

### DESCRIPTION OF EMBODIMENTS

The invention is described below in greater detail.

The curable composition comprised by the ink of the invention includes:
(A) an organopolysiloxane of formula (1) below,
(B) a photopolymerization initiator, and
(C) a hydrosilylation catalyst.

### [Component (A)]

Component (A) is an organopolysiloxane of formula (1) below. 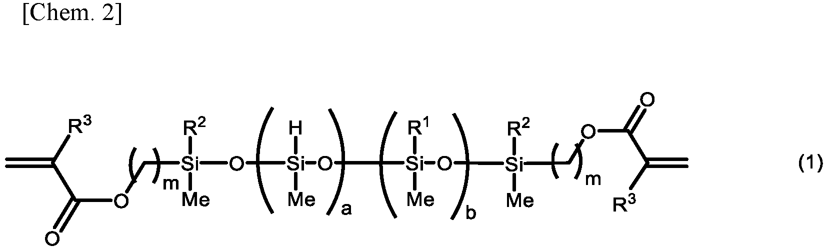 In the formula, each R¹ is independently a substituted or unsubstituted alkyl group of 1 to 8 carbon atoms, each R² is independently a substituted or unsubstituted alkyl group or aryl group, each R³ is independently a hydrogen atom or a methyl group, Me represents a methyl group, the subscript 'm' is independently at each occurrence an integer from 1 to 10, the subscripts 'a' and 'b' are each independently an integer of 1 or more, the sum a+b is an integer from 3 to 120, and the respective siloxane units in parentheses to which a and b are attached may be arranged in any order.

The substituted or unsubstituted alkyl groups of 1 to 8 carbon atoms represented by R¹ may be linear, branched or cyclic. Specific examples include methyl, ethyl, n-propyl, isopropyl, n-butyl, isobutyl, tert-butyl, n-hexyl, cyclohexyl, n-octyl and 2-ethylhexyl groups. Some or all of the hydrogen atoms bonded to carbon atoms on these alkyl groups may be substituted with halogen atoms such as chlorine, fluorine and bromine. Examples of such halogen-substituted alkyl groups include 3-chloropropyl and 3,3,3-trifluoropropyl groups.

Of these, linear alkyl groups such as methyl, ethyl, n-propyl, n-butyl, n-hexyl and n-octyl groups are preferred. From the standpoint of the ease of removing unreacted ingredients and increasing the surface tension, alkyl groups of 1 to 6 carbon atoms, especially 3 to 6 carbon atoms, are more preferred. n-Propyl groups are most preferred.

The substituted or unsubstituted alkyl groups represented by R² may be linear, branched or cyclic. Groups having from 1 to 8 carbon atoms are preferred. Specific examples include methyl, ethyl, n-propyl, isopropyl, n-butyl, isobutyl, tert-butyl, n-hexyl, cyclohexyl, n-octyl and 2-ethylhexyl groups. Some or all hydrogen atoms bonded to carbon atoms on these alkyl groups may be substituted with halogen atoms such as chlorine, fluorine and bromine. Examples of such halogen-substituted alkyl groups include 3-chloropropyl and 3,3,3-trifluoropropyl groups. The substituted or unsubstituted aryl groups are preferably ones having from 6 to 20 carbon atoms, specific examples of which include phenyl and tolyl groups. Some or all of the hydrogen atoms bonded to carbon atoms on these aryl groups may be substituted with the same halogen atoms as mentioned above. Examples of such halogen-substituted aryl groups include chlorophenyl and fluorophenyl groups.

Of these, alkyl groups of 1 to 6 carbon atoms and aryl groups of 6 to 10 carbon atoms are preferred. Methyl groups are more preferred.

The subscript 'a' represents an integer of 1 or more, preferably from 1 to 60, more preferably from 1 to 30, and even more preferably from 3 to 20. The subscript 'b' represents an integer of 1 or more, preferably from 1 to 60, more preferably from 1 to 30, and even more preferably from 3 to 20. The sum a+b is an integer from 3 to 120, preferably from 3 to 80, and especially from 6 to 20. When a+b is more than 120, the viscosity of the polysiloxane becomes high, as a result of which the inkjet jettability is inadequate.

The subscript 'm' is an integer from 1 to 10, preferably from 1 to 5, and especially from 2 to 4. When 'm' exceeds 10, unreacted disiloxane is difficult to remove at the time of synthesis.

The siloxane units in formula (1) may be arranged in any order. For example, they may be arranged randomly, in blocks or in an alternating sequence.

Specific examples of the compound of formula (1) include those shown below. In the following formulas, "Me" represents a methyl group and "n-Pr" represents an n-propyl group. The same applies below. 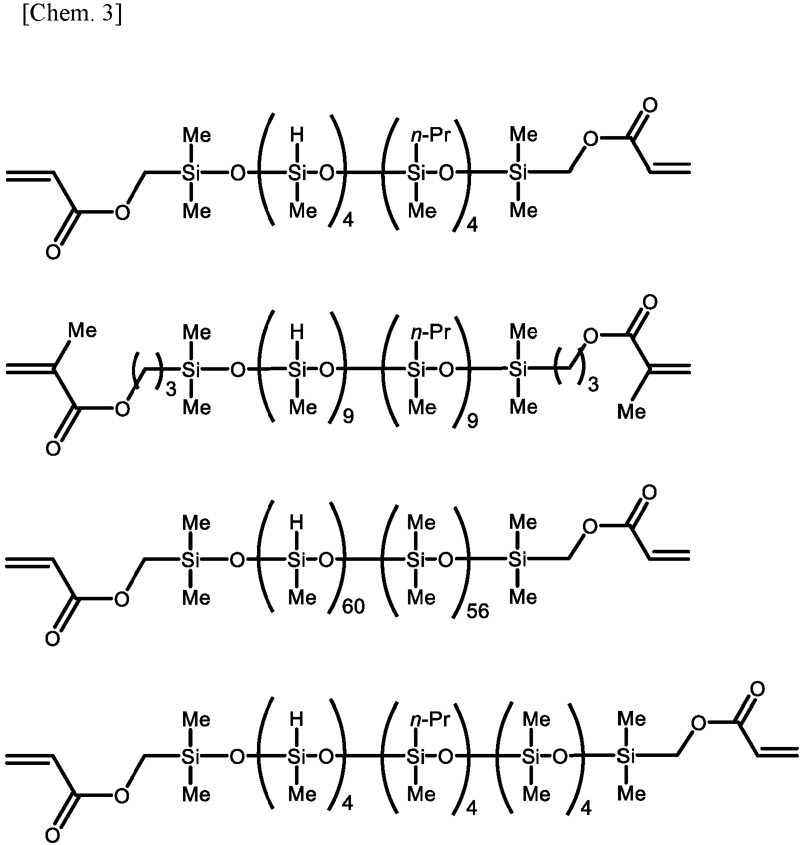 In these formulas, the siloxane units in parentheses may be arranged in any order.

From the standpoint of the inkjet jettability, the (meth)acryl-functional organopolysiloxane of component (A) has a surface tension at 23°C which is preferably from 23 to 30 mN/m, and a viscosity at 23°C which is preferably from 5 to 80 mPa·s.

In this invention, the surface tension is a value measured using the CBVP-Z automatic surface tensiometer from Kyowa Interface Science Co., Ltd. The viscosity is a value measured using a rotational viscosity from Toki Sangyo Co., Ltd.

Component (A) can be obtained by reacting a cyclic organohydrogenpolysiloxane of general formula (2-1) below, or a mixture of a cyclic organohydrogenpolysiloxane of general formula (2-2) below and a cyclic dimethylpolysiloxane of general formula (2') below, with a disiloxane of general formula (3) below in the presence of a Brønsted acid 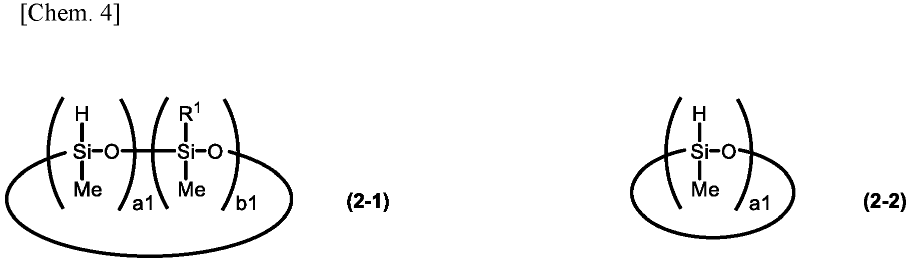 wherein R¹ is the same as above, the subscripts a1 and b1 are each independently an integer from 1 to 7, the sum a1+b1 is an integer from 3 to 8, and the siloxane units in parentheses may be arranged in any order. 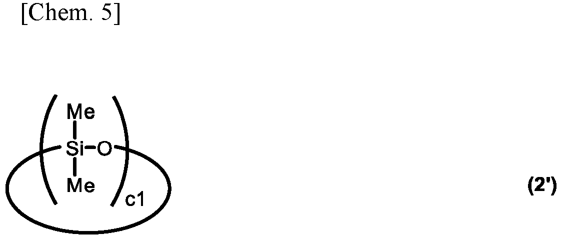 wherein c1 is an integer from 3 to 10. 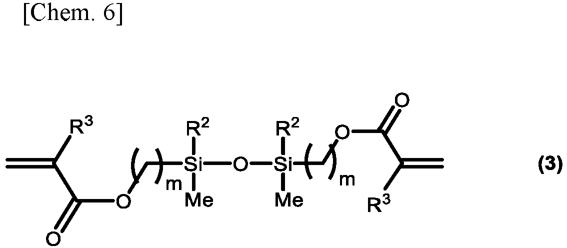 wherein R², R³ and m are the same as above.

In the above formulas, a1 and b1 are each independently an integer from 1 to 7, preferably from 1 to 4, and more preferably from 1 to 3. The sum a1+b1 is an integer from 3 to 8, preferably from 3 to 7, and more preferably from 3 to 5. Cyclic siloxanes in which a1+b1 is less than 3 may be difficult to synthesize; when a1+b1 is greater than 8, unreacted cyclic organohydrogenpolysiloxane may be difficult to remove.

In formula (2-1), from the standpoint of the ring-opening polymerization reactivity and the surface tension of the resulting polysiloxane, the ratio b1/(a1+b1) is preferably from 0.25 to 0.5.

The respective siloxane units in formula (2-1) may be arranged in any order. For example, they may be arranged randomly, in blocks or in an alternating sequence.

The subscript 'c1' is preferably an integer from 4 to 8, and more preferably an integer from 4 to 6.

Specific examples of the cyclic organohydrogenpolysiloxane of formula (2-1) include 2,4,6,8-tetramethylcyclotetrasiloxane, 2,2,4,6,6,8-hexamethylcyclotetrasiloxane, 2,4,6,8-tetramethyl-2-n-propylcyclotetrasiloxane, 2,4,6,8-tetramethyl-2,4-di-n-propylcyclotetrasiloxane, 2,4,6,8-tetramethyl-2,6-di-n-propylcyclotetrasiloxane and 2,4,6,8-tetramethyl-2,4,6-tri-n-propylcyclotetrasiloxane.

Of these, 2,4,6,8-tetramethyl-2,4-di-n-propylcyclotetrasiloxane and 2,4,6,8-tetramethyl-2,6-di-n-propylcyclotetrasiloxane are preferred.

Specific examples of the compound of formula (3) include 1,3-bis(acryloyloxymethyl)tetramethyldisiloxane, 1,3-bis(methacryloyloxymethyl)tetramethyldisiloxane, 1,3-bis(acryloyloxypropyl)tetramethyldisiloxane and 1,3-bis(methacryloyloxypropyl)tetramethyldisiloxane.

The amounts in which the above compounds are used can be adjusted according to the a1 and b1 numbers in the compound of formula (2-1) serving as a starting material and according to the molar ratio between the compounds of formula (2-1) and formula (3) in the ring-opening polymerization reaction such that the 'a' and 'b' values in the resulting organopolysiloxane of formula (1) fall within the above-indicated ranges. Or they may be adjusted according to the a1 number in formula (2-2) and the c1 number in formula (2') and according to the molar ratio among the compounds of formulas (2-2), (2') and (3) in the ring-opening polymerization reaction.

Examples of Brønsted acids include concentrated hydrochloric acid, concentrated sulfuric acid, concentrated nitric acid, trifluoroacetic acid, methanesulfonic acid, trifluoromethanesulfonic acid, benzenesulfonic acid, p-toluenesulfonic acid, p-nitrobenzenesulfonic acid and 1,1,1-trifluoro-N-[(trifluoromethyl)sulfonyl]methanesulfonamide. Of these, from the standpoint of the compatibility between the cyclic organohydrogenpolysiloxane, etc. of general formula (2-1) and the disiloxane of general formula (3), concentrated hydrochloric acid, concentrated sulfuric acid, trifluoroacetic acid, methanesulfonic acid and trifluoromethanesulfonic acid are preferred.

The Brønsted acid is added in an amount which, taking into consideration the reaction time and the neutralization step, is preferably from 0.01 to 2 parts by weight per 100 parts by weight of, collectively, the cyclic organohydrogenpolysiloxane of general formula (2-1) or the siloxanes of general formulas (2-2) and (2') and the disiloxane of general formula (3).

In the method for preparing the (meth)acryl-functional organopolysiloxane of the invention, polymerization may be carried out in a solvent-free system or may be carried out using an organic solvent such as toluene. An antioxidant such as di-t-butylhydroxytoluene may be added in order to prevent gelation during polymerization.

Polymerization should be carried out under known conditions, and can preferably be carried out at between 50°C and 100°C for a period of from 1 to 24 hours.

### [Component (B)]

Component (B) is a photopolymerization initiator. Examples of photopolymerization initiators include 2,2-diethoxyacetophenone, 2,2-dimethoxy-1,2-diphenylethan-1-one (Omnirad 651), 1-hydroxycyclohexyl phenyl ketone (Omnirad 184), 2-hydroxy-2-methyl-1-phenylpropan-1-one (Omnirad 1173), 2-hydroxy-1-{4-[4-(2-hydroxy-2-methylpropionyl)benzyl]phenyl}-2-methylpropan-1-one (Omnirad 127), phenylglyoxylic acid methyl ester (Omnirad MBF), 2-methyl-1-[4-(methylthio)phenyl]-2-morpholinopropan-1-one (Omnirad 907), 2-benzyl-2-dimethylamino-1-(4-morpholinophenyl-1-butanone (Omnirad 369), bis(2,4,6-trimethylbenzoyl)phenylphosphine oxide (Omnirad 819) and 2,4,6-trimethylbenzoyldiphenylphosphine oxide (Omnirad TPO) (the above being from IGM Resins B.V.), and mixtures thereof.

Of component (B), from the standpoint of the compatibility with component (A), 2-hydroxy-2-methyl-1-phenylpropane-1-one is preferred.

The photopolymerization initiator is added in an amount which, although not particularly limited, is preferably from 0.01 to 20 parts by weight, and more preferably from 0.1 to 10 parts by weight, per 100 parts by weight of the combined amount of component (A) and the subsequently described optional component (D). At less than 0.01 part by weight, the curability of the composition may be inadequate; at more than 20 parts by weight, the amount of weight loss during curing is large and the mechanical properties after curing may worsen.

### [Component (C)]

Component (C) is a hydrosilylation catalyst for promoting addition reactions between (meth)acryloyl groups in component (A) and (meth)acryloyl groups in the subsequently described component (D) with hydrosilyl groups in component (A). Catalysts that may be used in hydrosilylation are exemplified by well-known catalysts. Specific examples include platinum family metals such as platinum (including platinum black), rhodium and palladium; platinic chloride, chloroplatinic acid and chloroplatinic acid salts such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂ and Na₂HPtCl₄·nH₂O (wherein n in the formula is an integer from 0 to 6), and is preferably 0 or 6; alcohol-modified chloroplatinic acids (see U.S. Pat. No. 3,220,972); complexes of chloroplatinic acid and olefins (see U.S. Pat. Nos. 3,159,601, 3,159,662 and 3,775,452); platinum family metals such as platinum black or palladium supported on a support such as alumina, silica or carbon; rhodium-olefin complexes; chlorotris(triphenylphosphine)rhodium (Wilkinson's catalyst); and complexes of a platinum chloride, chloroplatinic acid or chloroplatinic acid salt with a vinyl group-containing siloxane, especially a vinyl group-containing cyclic siloxane.

The hydrosilylation catalyst is added in an amount which is not particularly limited, so long as it is an amount that promotes curing (hydrosilylation) of the composition. The amount of hydrosilylation catalyst added per 100 parts by weight of the combined amount of component (A) and the subsequently described optional component (D) is preferably from 0.01 to 20 parts by weight, and more preferably from 0.1 to 10 parts by weight (especially an amount such that the content by weight of the platinum family metal atoms within this component is preferably from 0.01 to 500 ppm, more preferably from 0.05 to 100 ppm, and even more preferably from 0.01 to 50 ppm). At less than 0.01 part by weight, the curability of the composition may be inadequate; at more than 20 parts by weight, the shelf life may worsen and thickening of the curable composition may arise.

### [Component (D)]

Component (D) is a monofunctional or polyfunctional (meth)acrylate compound lacking a siloxane structure. This can be mixed together with component (A) and used as a reactive diluent or a surface tension modifier.

Examples of monofunctional (meth)acrylate compounds lacking a siloxane structure include isoamyl acrylate, lauryl acrylate, stearyl acrylate, ethoxy diethylene glycol acrylate, methoxy triethylene glycol acrylate, 2-ethylhexyl diglycol acrylate, phenoxyethyl acrylate, phenoxy diethylene glycol acrylate, tetrahydrofurfuryl acrylate, isobornyl acrylate and mixtures thereof. Isobornyl acrylate is especially preferred.

Examples of polyfunctional (meth)acrylate compounds lacking a siloxane structure include triethylene glycol diacrylate, polytetramethylene glycol diacrylate, neopentyl glycol diacrylate, 1,6-hexanediol diacrylate, dimethyloltricyclodecane diacrylate, trimethylolpropane triacrylate, pentaerythritol tetraacrylate and mixtures thereof. Dimethyloltricyclodecane diacrylate is especially preferred.

The (meth)acrylate compound of component (D) may be of one type used alone or a plurality of two or more types may be used together. When component (D) is used, for reasons having to do with the viscosity, surface tension and curing shrinkage of the composition, the amount added per 100 parts by weight of component (A) is preferably from 0.1 to 100 parts by weight, more preferably from 5 to 100 parts by weight, and even more preferably from 10 to 50 parts by weight.

### [Other Ingredients]

In addition to components (A) to (C) and the optionally added component (D), the curable composition of the invention may also include other ingredients such as those mentioned below, provided that doing so does not detract from the objects of the invention.

The curable composition of the invention may include a compound that has the effect of suppressing/regulating the addition curing reaction (a hydrosilylation regulator). Hitherto known compounds may be used for this purpose. Specific examples include phosphorus-containing compounds such as triphenylphosphine; nitrogen atom-containing compounds such as tributylamine, tetramethylethylenediamine and benzotriazole; sulfur atom-containing compounds; acetylene compounds such as acetylene alcohol; hydroperoxy compounds; and maleic acid derivatives.

Examples of other ingredients include hydrosilyl group-containing crosslinking agents for enhancing the addition curability, silane coupling agents and the like for imparting adhesion to substrates, antioxidants and light stabilizers, heat resistance enhancers such as metal oxides and metal hydroxides, and dyes for coloration.

The curable composition can be obtained by, for example, stirring or mixing together in the usual manner components (A), (B) and (C), optional component (D) and the other ingredients. The apparatuses used for operations such as stirring are not particularly limited. For example, use can be made of an automated mortar, a three-roll mill, a ball mill or a planetary mixer. These apparatuses may be suitably combined.

In the curable composition, as a rule, inkjet jetting is possible when the surface tension of the composition at 23°C is from 23 to 30 mN/m, preferably from 23 to 28 mN/m, and when the viscosity at 23°C is from 5 to 80 mPa·s, preferably from 8 to 70 mPa·s. Within these ranges, stable inkjet jetting can be carried out, enabling the inventive composition to be suitably used as an inkjet ink. The method for measuring the viscosity of the composition will be described later in the Specification.

The curing conditions for the curable composition may be set to from 1 to 24 hours at 25°C, although heating at 40 to 120°C to promote curing is also possible.

In cases where the curable composition of the invention is cured by UV light, exemplary sources of the UV light that is irradiated include UV-LED lamps, high-pressure mercury vapor lamps, ultrahigh-pressure mercury vapor lamps, metal halide lamps, carbon arc lamps and xenon lamps. The UV dose (total exposure dose) with respect to, for example, a sheet of the inventive composition molded to a thickness of about 2.0 mm, is preferably from 1 to 5,000 mJ/cm², and more preferably from 10 to 4,000 mJ/cm². That is, when UV light having an illuminance of 100 mW/cm² is used, about 0.01 to 50 seconds of UV light should be irradiated.

These curing methods may be combined. For example, following UV irradiation, curing may be further promoted by carrying out a postcure via heating.

The curable composition of the invention may be applied to various types of substrates and used as a coating or adhesive. Substrates that may be used include composite materials, metal components, plastic components and ceramic components; casings for electrical applications, electronic applications, optical applications and the like; and those used in fields such as the coating, bonding and sealing of components.

### EXAMPLES

The invention is illustrated more fully below by way of Synthesis Examples, Comparative Synthesis Examples, Examples according to the invention and Comparative Examples, although the invention is not limited by these Examples. In the Examples below, the number-average molecular weight (Mn) and weight-average molecular weight (Mw) obtained by gel permeation chromatography (GPC) are standard polystyrene-equivalent values obtained using the HLC-8320 GPC from Tosoh Corporation. The ¹H-NMR spectra were measured using an NMR spectrometer from JEOL, Ltd. Also, in the formulas below, "Me" represents a methyl group and "n-Pr" represents an n-propyl group.

### [Synthesis Example 1]

A one-liter, four-neck separable flask equipped with a Graham condenser and a thermometer was charged with 649.4 g of the cyclic organohydrogenpolysiloxane of formula (4) below, 302.5 g of 1,3-bis(acryloyloxymethyl)tetramethyldisiloxane, 0.4 g of di-t-butylhydroxytoluene and 2.6 g of trifluoromethanesulfonic acid, and the temperature was raised under stirring on an oil bath. Once the internal temperature reached 80 to 90°C, stirring was continued for another 6 hours. Stirring was then stopped and the system was cooled to 25°C, after which 30 g of Kyowaad 500 (Kyowa Chemical Industry, Ltd.) was added to neutralize the trifluoromethanesulfonic acid and stirring was carried out for 8 hours at 25°C. Next, the unreacted material was removed by 24 hours of distillation at an internal temperature of 140°C and 10 mmHg while bubbling air through the system. The system was cooled to 25°C, following which the solids were removed by filtration, giving 674 g (yield, 70.8%) of the polysiloxane of formula (5) below.

The GPC and ¹H-NMR results are shown below.

| | |
|---|---|
| GPC: | Mn/Mw = 1,064/1,580 |
| ¹H-NMR: | (6.37 ppm, d, 2H, CH₂=CH) (6.12 ppm, dd, 2H, CH₂=CH) |
| | (5.79 ppm, d, 2H, CH₂=CH) (4.69 ppm, s, 4H, Si-H) |
| | (3.82 ppm, m, 4H, O-CH₂-Si) (1.40 ppm, m, 8H, CH₃CH₂CH₂) |
| | (0.95 ppm, m, 12H, CH₃CH₂CH₂) (0.55 ppm, m, 8H, CH₃CH₂CH₂) |
| | (0.20-0.04 ppm, m, 36H, CH₃-Si) |

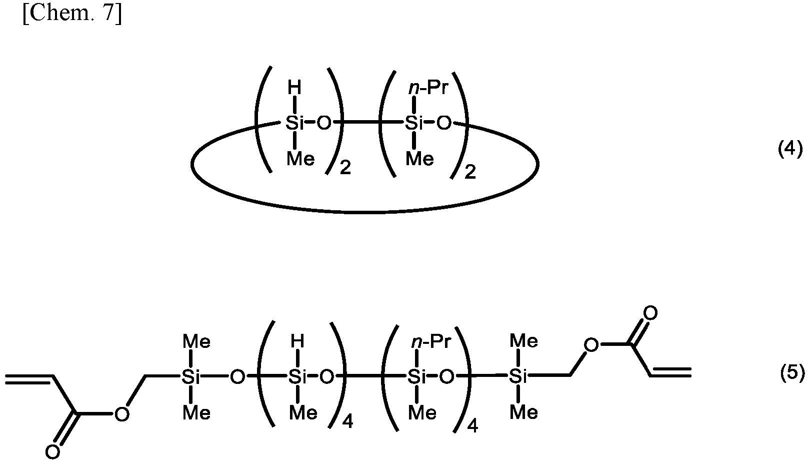

In these formulas, the siloxane units in parentheses have an arrangement that is random, alternating or in blocks.

### [Synthesis Example 2]

A one-liter, four-neck separable flask equipped with a Graham condenser and a thermometer was charged with 649.4 g of the cyclic organohydrogenpolysiloxane of formula (4) above, 154.6 g of 1,3-bis(methacryloyloxypropyl)tetramethyldisiloxane, 0.4 g of di-t-butylhydroxytoluene and 0.8 g of trifluoromethanesulfonic acid, and the temperature was raised under stirring on an oil bath. Once the internal temperature reached 80 to 90°C, stirring was continued for another 8 hours. Stirring was then stopped and the system was cooled to 25°C, after which 10 g of Kyowaad 500 (Kyowa Chemical Industry, Ltd.) was added to neutralize the trifluoromethanesulfonic acid and stirring was carried out for 8 hours at 25°C. Next, the unreacted material was removed by 24 hours of distillation at an internal temperature of 140°C and 10 mmHg while bubbling air through the system. The system was cooled to 25°C, following which the solids were removed by filtration, giving 704.6 g of the polysiloxane of formula (6) below (yield, 87.6%).

The GPC and ¹H-NMR results are shown below.

| | |
|---|---|
| GPC: | Mn/Mw = 1,666/3,042 |
| ¹H-NMR: | (6.10 ppm, s, 2H, CH₂=CCH₃) (5.54 ppm, s, 2H, CH₂=CCH₃) |
| | (4.70 ppm, s, 9H, Si-H) (4.10 ppm, m, 4H, O-CH₂, CH₂CH₂-Si) |
| | (1.94 ppm, s, 6H, CH₂=CCH₃) (1.72-1.69 ppm, m, 4H, O-CH₂, CH₂CH₂-Si) |
| | (1.40 ppm, m, 18H, CH₃CH₂CH₂) (0.95 ppm, m, 27H, CH₃CH₂CH₂) |
| | (0.55 ppm, m, 22H, O-CH₂, CH₂CH₂-Si, CH₃CH₂CH₂) |
| | (0.20-0.04 ppm, m, 66H, CH₃-Si) |

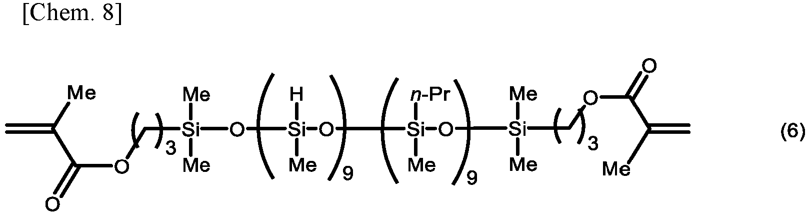

In this formula, the siloxane units in parentheses have an arrangement that is random, alternating or in blocks.

### [Synthesis Example 3]

A one-liter, four-neck separable flask equipped with a Graham condenser and a thermometer was charged with 30.25 g of 1,3-bis(acryloyloxymethyl)tetramethyldisiloxane, 444.9 g of octamethylcyclotetrasiloxane, 360.8 g of 2,4,6,8-tetramethylcyclotetrasiloxane, 0.4 g of di-t-butylhydroxytoluene and 0.3 g of trifluoromethanesulfonic acid, and the temperature was raised under stirring on an oil bath. Once the internal temperature reached 80 to 90°C, stirring was continued for another 6 hours. Stirring was then stopped and the system was cooled to 25°C, after which 4 g of Kyowaad 500 (Kyowa Chemical Industry, Ltd.) was added to neutralize the trifluoromethanesulfonic acid and stirring was carried out for 8 hours at 25°C. Next, the unreacted material was removed by 24 hours of distillation at an internal temperature of 140°C and 10 mmHg while bubbling air through the system. The system was cooled to 25°C, following which the solids were removed by filtration, giving 678.8 g (yield, 81.1%) of the polysiloxane of formula (7) below.

The GPC and ¹H-NMR results are shown below.

| | |
|---|---|
| GPC: | Mn/Mw = 9,133/15,456 |
| ¹H-NMR: | (6.38 ppm, d, 2H, CH₂=CH) (6.13 ppm, dd, 2H, CH₂=CH) |
| | (5.79 ppm, d, 2H, CH₂=CH) (4.69 ppm, m, 60H, Si-H) |
| | (3.83 ppm, m, 4H, O-CH₂-Si) (0.40-0.20 ppm, m, 528H, CH₃-Si) |

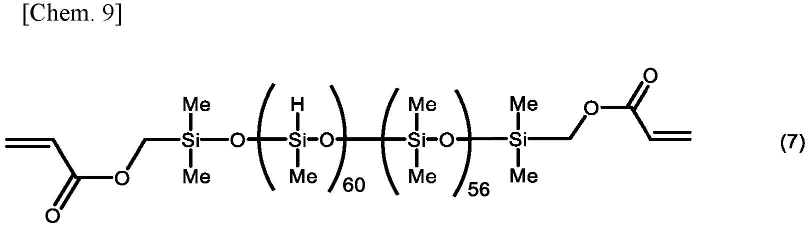

In this formula, the siloxane units in parentheses have an arrangement that is random, alternating or in blocks.

### [Comparative Synthesis Example 1]

A one-liter, four-neck separable flask equipped with a Graham condenser and a thermometer was charged with 800.6 g of octamethylcyclotetrasiloxane, 75.8 g of 1,3-bis(acryloyloxymethyl)tetramethyldisiloxane, 0.4 g of dibutylhydroxytoluene and 1.3 g of trifluoromethanesulfonic acid, and the temperature was raised under stirring on an oil bath. Once the internal temperature reached 80 to 90°C, stirring was continued for another 6 hours. Stirring was then stopped and the system was cooled to 25°C, after which 4 g of Kyowaad 500 (Kyowa Chemical Industry, Ltd.) was added to neutralize the trifluoromethanesulfonic acid and stirring was carried out for 8 hours at 25°C. Next, the unreacted material was removed by 24 hours of distillation at an internal temperature of 140°C and 10 mmHg while bubbling air through the system. The system was cooled to 25°C, following which the solids were removed by filtration, giving 725.6 g (yield, 82.8%) of the polysiloxane of formula (8) below.

The GPC and ¹H-NMR results are shown below.

| | |
|---|---|
| GPC: | Mn/Mw = 3,670/6,701 |
| ¹H-NMR: | (6.38 ppm, d, 2H, CH₂=CH) (6.12 ppm, dd, 2H, CH₂=CH) |
| | (5.79 ppm, d, 2H, CH₂=CH) (3.82 ppm, s, 4H, O-CH₂-Si) |
| | (0.30-0.08 ppm, m, 264H, CH₃-Si) |

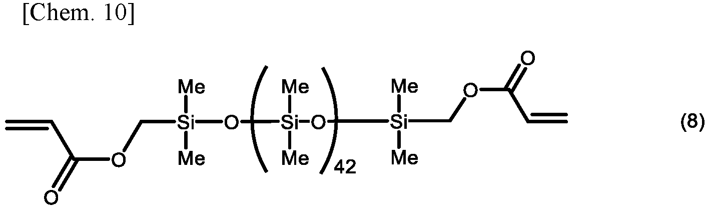

### [Comparative Synthesis Example 2]

A one-liter, four-neck separable flask equipped with a Graham condenser and a thermometer was charged with 690.1 g of octamethylcyclotetrasiloxane, 180 g of 1,3-bis(methacryloyloxypropyl)tetramethyldisiloxane, 0.4 g of dibutylhydroxytoluene and 1.3 g of trifluoromethanesulfonic acid, and the temperature was raised under stirring on an oil bath. Once the internal temperature reached 80 to 90°C, stirring was continued for another 6 hours. Stirring was then stopped and the system was cooled to 25°C, after which 4 g of Kyowaad 500 (Kyowa Chemical Industry, Ltd.) was added to neutralize the trifluoromethanesulfonic acid and stirring was carried out for 8 hours at 25°C. Next, the unreacted material was removed by 24 hours of distillation at an internal temperature of 140°C and 10 mmHg while bubbling air through the system. The system was cooled to 25°C, following which the solids were removed by filtration, giving 696 g (yield, 80%) of the polysiloxane of formula (9) below.

The GPC and ¹H-NMR results are shown below.

| | |
|---|---|
| GPC: | Mn/Mw = 2,100/3,834 |
| ¹H-NMR: | (6.10 ppm, s, 2H, CH₂=CH₃) (5.54 ppm, s, 2H, CH₂=CH₃) |
| | (4.10 ppm, t, 4H, O-CH₂-CH₂) (1.95 ppm, s, 6H, CH₂=CCH₃) |
| | (1.72-1.68 ppm, m, 4H, CH₂CH₂CH₂) (0.59-0.55 ppm, m, 4H, CH₂CH₂CH₂) |
| | (0.18-0.5ppm, m, 132H, CH₃-Si) |

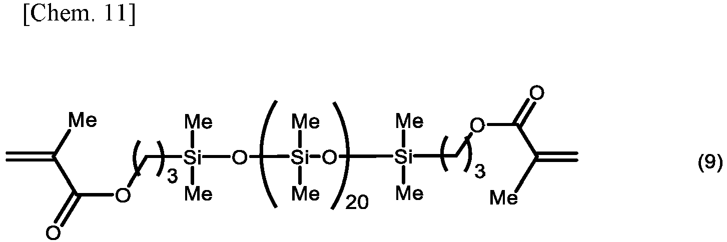

### [Examples 1 to 4, Comparative Examples 1 to 6]

Curable compositions were prepared in the usual manner according to the formulations shown in Table 1 below.

The ingredients used in the Examples and the Comparative Examples are shown below. In formulas (5) to (7) and (10), the siloxane units in parentheses have an arrangement that is random, alternating or in blocks.

### Component (A)

### (A-1): The organopolysiloxane of average formula (5) below (Synthesis Example 1)

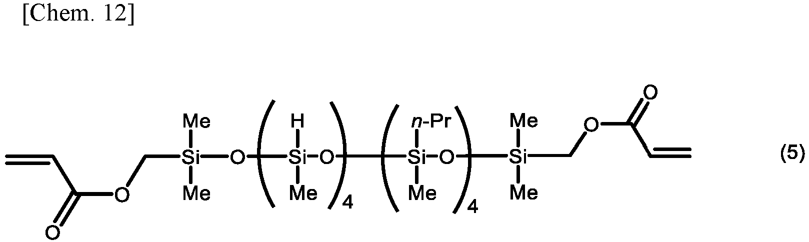

### (A-2): The organopolysiloxane of average formula (6) below (Synthesis Example 2)

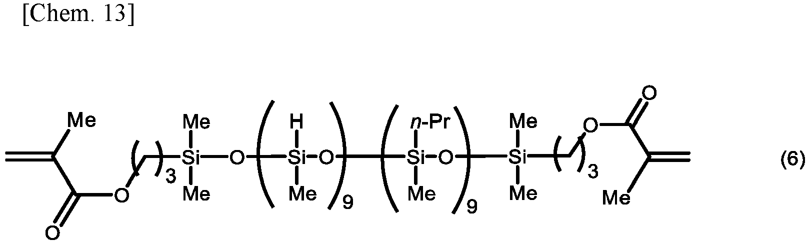

### (A-3): The organopolysiloxane of average formula (7) below (Synthesis Example 3)

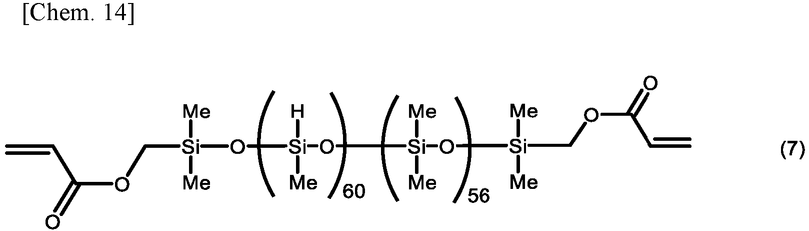

### (A-4): The organopolysiloxane of average formula (8) below (Comparative Synthesis Example 1)

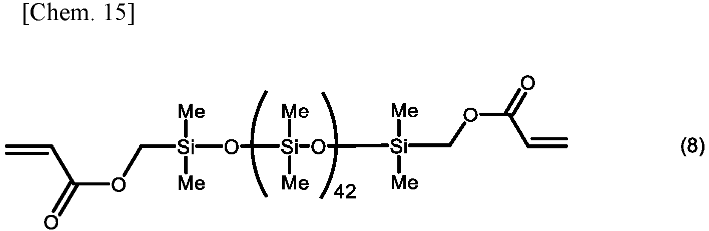

### (A-5): The organopolysiloxane of average formula (9) below (Comparative Synthesis Example 2)

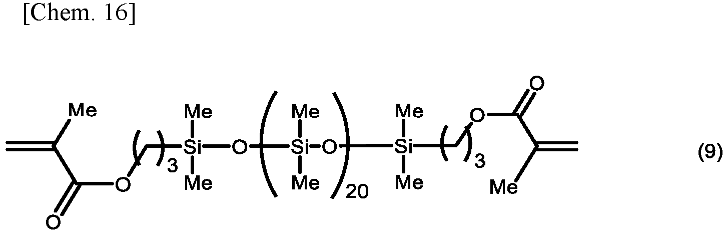

### Component (B)

2-Hydroxy-2-methyl-1-phenylpropan-1-one (Omnirad 1173, IGM Resins B.V.)

### Component (C)

Dimethylsiloxane solution of platinum-1,3-divinyl-1,1,3,3-tetramethyldisiloxane complex (platinum content, 1.0 wt%)

### Component (D)

Isobornyl acrylate (Light Acrylate IB-XA, Kyoeisha Chemical Co., Ltd.)

### Component (E)

The organohydrogenpolysiloxane of average formula (10) below

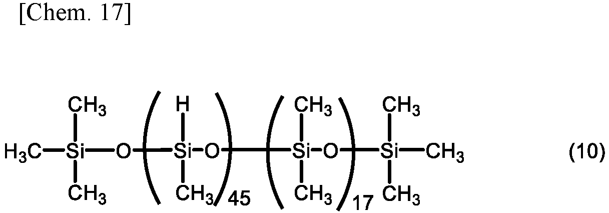

The curable compositions obtained were evaluated by the following methods. The results are shown in Table 1.

### [Viscosity]

The viscosity was measured at 23°C using a rotational viscometer from Toki Sangyo Co., Ltd.

### [Surface Tension]

The surface tension was measured using the CBVP-Z automatic surface tensiometer from Kyowa Interface Science Co., Ltd.

### [Inkjet Jettability]

The inkjet jettability was evaluated by capturing with a camera the jetting state when using the DMP-2831 liquid drop observation system from FUJIFILM Dimatix (and the DMC-11610 Dimatix Materials Cartridge for use specifically with the DMP-2831) under the following jetting conditions: frequency, 10 kHz; head temperature, 23°C; nozzle diameter, 80 µm.

The inkjet jettability was rated as "○" when liquid droplets of at least 8 to 30 pL/drop were ejected and there was no existence of droplet twisting or spray and no defects such as head contamination, and was rated as "×" when this was not the case.

### [Radical Curability]

The radical curability was evaluated by weighing out 0.5 g of the liquid curable composition into an aluminum Petri dish and forming a liquid film having a thickness of about 300 µm, subsequently using a UV-LED lamp with a peak wavelength of 365 nm to irradiate each composition with, using 365 nm light as the guide, UV light at 23°C, an irradiation intensity of 100 mW/cm² and an exposure dose of 3,000 mJ/cm² in a nitrogen atmosphere, and then carrying out a finger touch test immediately after the completion of irradiation.

The radical curability was rated as "○" when the composition did not adhere to the finger, and was rated as "×" when it did adhere.

### [Addition Curability]

The addition curability was evaluated by weighing out 0.5 g of the liquid curable composition into an aluminum Petri dish and forming a liquid film having a thickness of about 300 µm, subsequently treating the composition at 120°C for 60 minutes, and then carrying out a finger touch test.

The addition curability was rated as "○" when the composition did not adhere to the finger, and was rated as "×" when it did adhere.

**[Table 1]**

| pbw | Example | | | | Comparative Example | | | | | |
|---|---|---|---|---|---|---|---|---|---|---|
| | 1 | 2 | 3 | 4 | 1 | 2 | 3 | 4 | 5 | 6 |
| (A-1) | 100 | - | - | - | - | - | - | - | - | - |
| (A-2) | - | 70 | 100 | - | - | - | - | - | - | - |
| (A-3) | - | - | - | 70 | 100 | - | - | - | - | - |
| (A-4) | - | - | - | - | - | 100 | 70 | 70 | 70 | - |
| (A-5) | - | - | - | - | - | - | - | - | - | 70 |
| (B) | 0.1 | 0.1 | 0.1 | 0.1 | 0.1 | 0.1 | 0.1 | 0.1 | 0.1 | 0.1 |
| (C) | 0.1 | 0.1 | 0.1 | 0.1 | 0.1 | 0.1 | 0.1 | 0.1 | 0.1 | 0.1 |
| (D) | - | 30 | - | 30 | - | - | 30 | 30 | 30 | 30 |
| (E) | - | - | - | - | - | 12 | - | 18 | 35 | 43 |
| [Si-H]/[addition reactive C=C]* | 2.0 | 1.6 | 4.5 | 2.0 | 30.0 | 2.2 | 0 | 2.1 | 2.1 | 2.1 |
| Surface tension [mN/m] | 24 | 25 | 25 | 23 | 21 | 21 | 23 | 23 | 23 | 22 |
| Viscosity [mPa·s] | 10 | 10 | 23 | 60 | 109 | 50 | 40 | 38 | 33 | 25 |
| Inkjet jettability | ○ | ○ | ○ | ○ | × | × | ○ | ○ | ○ | × |
| Radical curability | ○ | ○ | ○ | ○ | ○ | × | ○ | × | × | × |
| Addition curability | ○ | ○ | ○ | ○ | ○ | ○ | × | ○ | ○ | ○ |

| | | | | | | | | | | |
|---|---|---|---|---|---|---|---|---|---|---|
| * The value of [Si-H] (moles)/[addition reactive C=C] (moles) indicates the ratio of the total number of hydrosilyl groups to the total number of carbon-carbon double bonds in the (meth)acryloyl groups included in the composition. | | | | | | | | | | |

As shown in Table 1, the curable compositions in Examples 1 to 4 had a good inkjet jettability and radical curing and addition curing were both possible.

On the other hand, in Comparative Examples 1, 2 and 6 in which the viscosity and/or the surface tension did not satisfy the ranges of the invention, the inkjet jettability was inferior.

Also, in Comparative Example 3 in which a (meth)acryl-functional organopolysiloxane without Si-H groups was used instead of component (A) of the invention, addition curability was not exhibited.

In addition, in Comparative Examples 2 and 4 to 6 in which a (meth)acryl-functional organopolysiloxane without Si-H groups and an organohydrogenpolysiloxane without (meth)acryl-functional groups were used together instead of component (A) of the invention, the radical curability was inferior.

## Claims

1. An ink for inkjet printing comprising a curable composition, the curable composition comprising:
(A) an organopolysiloxane of formula (1) below 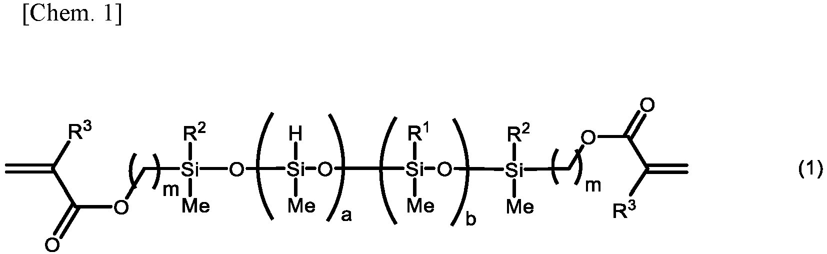
wherein each R¹ is independently a substituted or unsubstituted alkyl group of 1 to 8 carbon atoms, each R² is independently a substituted or unsubstituted alkyl group or aryl group,
each R³ is independently a hydrogen atom or a methyl group, Me represents a methyl group,
the subscript 'm' is independently at each occurrence an integer from 1 to 10, the subscripts 'a' and 'b' are each independently an integer of 1 or more, the sum a+b is an integer from 3 to 120, and the siloxane units in parentheses to which a and b are attached may be arranged in any order,
(B) a photopolymerization initiator, and
(C) a hydrosilylation catalyst,
wherein the composition has a surface tension at 23°C that is from 23 to 30 mN/m and a viscosity at 23°C that is from 5 to 80 mPa·s.

2. The ink according to claim 1, the curable composition further comprising:
(D) from 5 to 100 parts by weight of a (meth)acrylate compound lacking a siloxane structure per 100 parts by weight of component (A).

3. Use of the ink according to claim 1 or 2 in applications as coatings, sealants, adhesives, and stereolithography materials for 3D printers.

## Patentansprüche

1. Tinte für den Tintenstrahldruck, umfassend eine härtbare Zusammensetzung, wobei die härtbare Zusammensetzung umfasst:
(A) ein Organopolysiloxan der untenstehenden Formel (1) 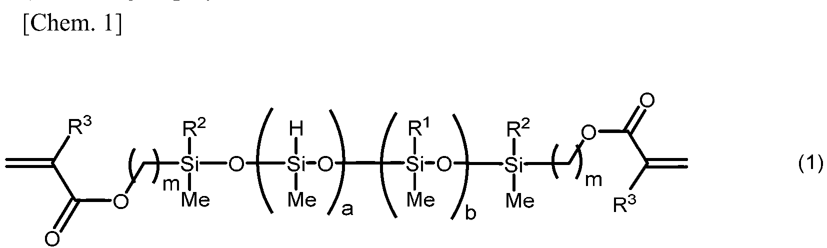 wobei jedes R¹ unabhängig voneinander eine substituierte oder unsubstituierte Alkylgruppe mit 1 bis 8 Kohlenstoffatomen ist, jedes R² unabhängig voneinander eine substituierte oder unsubstituierte Alkylgruppe oder Arylgruppe ist, jedes R³ unabhängig voneinander ein Wasserstoffatom oder eine Methylgruppe ist, Me eine Methylgruppe darstellt, der Index "m" unabhängig voneinander bei jedem Vorkommen eine ganze Zahl von 1 bis 10 ist, die Indizes "a" und "b" jeweils unabhängig voneinander eine ganze Zahl von 1 oder mehr sind, die Summe a+b eine ganze Zahl von 3 bis 120 ist und die Siloxaneinheiten in Klammern, an die a und b gebunden sind, in beliebiger Reihenfolge angeordnet sein können,
(B) einen Photopolymerisationsinitiator und
(C) einen Hydrosilylierungskatalysator,
wobei die Zusammensetzung eine Oberflächenspannung bei 23°C von 23 bis 30 mN/m und eine Viskosität bei 23°C von 5 bis 80 mPa·s aufweist.

2. Tinte gemäß Anspruch 1, wobei die härtbare Zusammensetzung ferner umfasst:
(D) 5 bis 100 Gewichtsteile einer (Meth)acrylatverbindung ohne Siloxanstruktur pro 100 Gewichtsteile der Komponente (A).

3. Verwendung der Tinte gemäß Anspruch 1 oder 2 in Anwendungen als Beschichtungen, Dichtungsmittel, Klebstoffe und Stereolithografiematerialien für 3D-Drucker.

## Revendications

1. Encre pour impression par jet d'encre comportant une composition durcissable, la composition durcissable comportant :
(A) un organopolysiloxane de formule (1) ci-dessous : 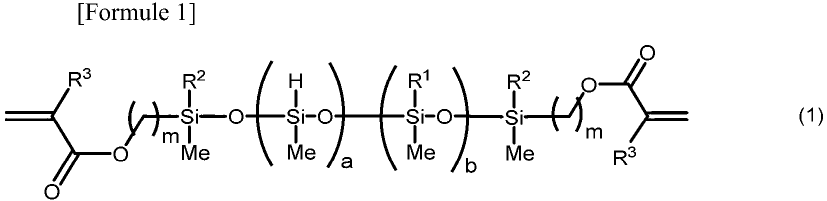 dans laquelle chaque R¹ est indépendamment un groupe alkyle substitué ou non substitué possédant 1 à 8 atomes de carbone, chaque R² est indépendamment un groupe alkyle ou un groupe aryle substitué ou non substitué, chaque R³ est indépendamment un atome d'hydrogène ou un groupe méthyle, Me représente un groupe méthyle, l'indice "m" est indépendamment, à chaque occurrence, un entier de 1 à 10, les indices "a" et " b" sont chacun, indépendamment l'un de l'autre, un entier de 1 ou plus, la somme a+b est un entier de 3 à 120, et les motifs de siloxane entre parenthèses auxquels a et b sont liés peuvent être disposés dans un ordre quelconque,
(B) un initiateur de photopolymérisation, et
(C) un catalyseur d'hydrosilylation,
dans laquelle la composition a une tension superficielle à 23 °C qui est de 23 à 30 mN/m et une viscosité à 23 °C qui est de 5 à 80 mPa·s.

2. Encre selon la revendication 1, la composition durcissable comportant en outre :
(D) de 5 à 100 parties en poids d'un composé de (méth)acrylate dépourvu de structure siloxane pour 100 parties en poids du composant (A).

3. Utilisation de l'encre selon la revendication 1 ou 2 dans des applications en tant que revêtements, mastics, adhésifs et matières de stéréolithographie pour des imprimantes 3D.
